Europäisches Patentamt

**European Patent Office**

**Office européen des brevets**

(19)

(11) Publication number: **0 003 506**
**A1**

## (12) EUROPEAN PATENT APPLICATION

(21) Application number: **79100113.4**

(22) Date of filing: **15.01.79**

(51) Int. Cl.²: **H 02 G 3/28, E 04 B 5/48**

(30) Priority: **02.02.78 US 874535**

(43) Date of publication of application: **22.08.79**
**Bulletin 79/17**

(84) Designated Contracting States: **BE DE FR NL**

(71) Applicant: **H.H. Robertson Company, Two Gateway Center, Pittsburgh Pennsylvania 15222 (US)**

(72) Inventor: **Fork, Frank William, 1877 Concord Drive, Allison Park Pennsylvania 15101 (US)**

(74) Representative: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P. Jakob, Dr. rer. nat. G. Bezold Maximilianstrasse 43, D-8000 München 22 (DE)**

(54) **Metal raceway section for wiring distribution system, and floor structure comprising such a raceway section.**

(57) A metal raceway section providing an electrical wiring distribution system in fill-on-slab or fill-on-grade construc- tions. The metal raceway section comprises a corrugated element presenting alternating lengthwise troughs and lengthwise flutes connected by common webs. Capping means (12, 13) are provided which enclose a lengthwise trough (18) and a lenthwise flute (17a) whereby the race- way section provides first and second wiring passageways. The raceway section also provides at least one passage- forming lengthwise flute (17b) adapted to cooperate with a surface presented by a substructure (21) – slab (22) or grade (23) – which supports the raceway section thereby to form an additional wiring passageway.

Fig. 4

EP 0 003 506 A1

ACTORUM AG

PATENTANWALTE

A. GRÜNECKER
DIPL.-ING.

H. KINKELDEY
DR.-ING.

W. STOCKMAIR
DR.-ING. · AeE (CALTECH)

K. SCHUMANN
DR RER NAT · DIPL.-PHYS.

P. H. JAKOB
DIPL.-ING.

G. BEZOLD
DR RER NAT · DIPL.-CHEM

8 MÜNCHEN 22
MAXIMILIANSTRASSE 43

Jan. 15, 1979
EP 54

H.H. ROBERTSON COMPANY

TITLE MODIFIED
see front page.

- 1 -

## Metal Raceway Section for Wiring Distribution System

This invention relates to metal raceway sections for installation in fill-on-slab or fill-on-grade constructions, and more particularly to metal raceway sections providing enclosed wiring passageways and at least one passageway-forming member.

Corrugated metal sheets are known having wide flat-bottom channels which are capped by closure members to provide wiring passageways. Such corrugated sheets have been intermingled with conventional corrugated sheets to provide a metal subfloor supporting a covering layer of concrete, see U.S. patent 2,912,848 (LEE et al).

Cellular metal raceway sections are known which provide at least two parallel cells separated by an intermediate trough; and wherein cover strips and chamber-defining members enclose the intermediate trough to form an additional unobstructed wiring passageway, see U.S. patent 3,592,956 (FORK).

The principal object of this invention is to provide a metal raceway section providing generally parallel wiring passageways and a passageway-forming flute adapted to cooperate with an upper surface presented by a supporting substructure to provide an additional wiring passageway.

Another object of this invention is to provide a metal raceway section assembled from a corrugated element and distinct capping elements which are individually packageable in nested relation with others of the same element for shipping compaction, thereby providing a significant reduction in shipping costs.

Another object of this invention is to provide a metal raceway section which provides all of the advantages of prior art cellular metal raceway sections but at significantly reduced material and fabrication costs.

Still another object of this invention is to provide an improved electrical wiring distribution floor structure wherein access to the wiring is provided from the space above and the space below the floor structure.

The present invention constitutes an improvement over the cellular metal raceway section described and claimed in U.S. patent 3,592,956.

The present invention provides a metal raceway section for use in concrete structures, particularly fill-on-slab and fill-on-grade installations. Broadly, the present metal raceway section comprises a corrugated element having alternating lengthwise troughs and lengthwise flutes. First capping means is provided which encloses a first of the lengthwise troughs to provide a first wiring passageway. Second capping means is provided which encloses a first of the lengthwise flutes to provide a second wiring passageway. Others of the lengthwise flutes comprise passageway-forming lengthwise flutes adapted to cooperate with the upper surface presented by a substructure supporting the raceway section to form additional wiring passageways.

In one preferred embodiment, the corrugated element presents alternating coplanar crests and coplanar valleys connected by inclined webs which cooperate to provide two lengthwise flutes and an intermediate lengthwise trough. When the capping means are installed, the first wiring passageway is positioned immediately between the second wiring passageway and the passageway-forming lengthwise flute and is separated therefrom by common webs.

The present invention also provides an improved electrical wiring distributing floor structure wherein the present metal raceway section is embedded between a substructure and a covering layer of concrete. The substructure may comprise, for example, a structural slab or a compacted layer of stone, earth or sand covered by a vapor barrier. The passageway-forming flutes of the present raceway section cooperate with the upper surface presented by the substructure to form additional wiring passageways. Suitable outlet fittings may be provided at selected locations in the floor structure for gaining access to the wiring passageways from the space above the floor.

The present metal raceway section may also be employed in the concrete floors of a multi-story building. In this instance the substructure comprises a structural slab. Suitable outlet fittings may also be provided in the substructure for gaining access to the wiring passageways from the space below the floor. Such outlet fittings normally but not exclusively communicate with those passageways which convey power wiring and/or signal and special services wiring.

The cost of shipping the present raceway sections to the job site is significantly less than that of cellular raceway sections of the prior art. For example, the several distinct elements which constitute the present raceway section may be separately packaged in nested relation with others of the same element for shipping compaction. Hence packages of the elements of the present raceway section contain more pounds of metal per unit volume than do packages of prior art cellular raceway section. This should be evident since the cellular raceway sections of the prior art are not nestable to the same degree as the elements of the present raceway section.

In drawings which illustrate embodiments of the invention,

FIGURE 1    is an exploded perspective view of a preferred embodiment of the metal raceway section of this invention;

FIGURE 2    is a cross-sectional view taken substantially along the line 2-2 of FIGURE 1;

FIGURE 3    is a cross-sectional view taken substantially along the line 3-3 of FIGURE 1;

FIGURE 4    is a perspective view of a floor structure incorporating the metal raceway section of FIGURE 1;

FIGURE 5    is a transverse sectional view of a concrete floor structure incorporating an alternative embodiment of the metal raceway section of this invention;

FIGURE 6    is a perspective view of a two-pour concrete floor structure incorporating the metal raceway section of this invention; and

FIGURE 7    is a cross-sectional view taken along the line 7-7 of FIGURE 6.

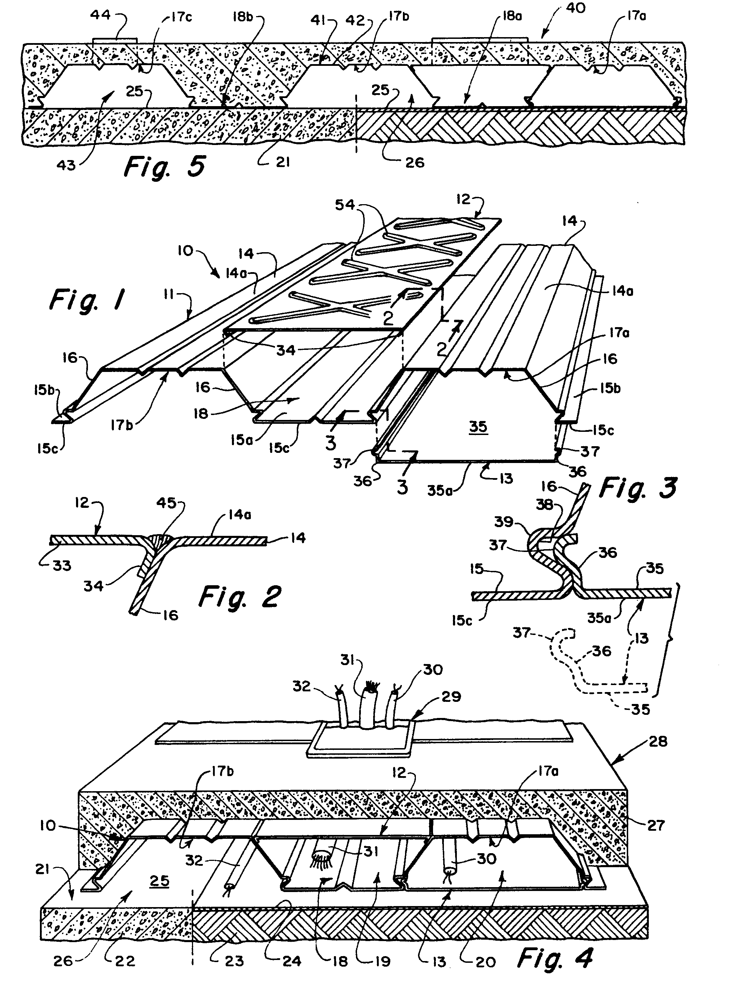

FIGURE 1 illustrates a metal raceway section 10 assembled from a corrugated element 11 and first and second capping
means 12, 13. The corrugated element 11 may be formed from
metal-coated steel, such as galvanized sheet metal having a
thickness of, for example, 20 gauge. The corrugated element
11 presents alternating crests 14 and valleys 15, including
an intermediate valley 15a and lateral valleys 15b, connected
by inclined webs 16. In the preferred embodiment, the
corrugated element 11 presents first and second spaced-apart
lengthwise flutes 17a, 17b, each of which is defined by a
crest 14 and the inclined webs 16 connected thereto; and
also presents an intermediate lengthwise trough 18 defined
by the intermediate valley 15a and the inclined web 16
connected thereto. The arrangement is such that the lengthwise trough 18 is separated from the first lengthwise flute
17a and the second lengthwise flute 17b by common inclined
webs 16.

In accordance with the present invention, the first or upper
capping means 12 is adapted to enclose the intermediate
lengthwise trough 18 to provide a first wiring passageway 19
(FIGURE 4). The second or lower capping means 13 is adapted
to enclose the first lengthwise flute 17a and cooperate
therewith to provide a second wiring passageway 20.

Further in accordance with the present invention, the
second lengthwise flute 17b (FIGURE 3) constitutes a passageway-forming flute. As shown in FIGURE 4, the metal raceway
section 10 overlies a substructure 21 which may comprise a
structural slab 22 or compacted stone, earth or sand 23
covered by a vapor barrier 24. The substructure 21 presents
an upper surface 25 which may comprise either the upper
surface of the structural slab 22 or the upper surface of
the vapor barrier 24. The passageway-forming flute 17b
cooperates with the upper surface 25 to provide an additional or third wiring passageway 26.

A layer of concrete 27 is provided over the substructure 21 and the metal raceway section 10 to complete the concrete
floor structure 28. It will be observed in FIGURE 4 that a
suitable floor outlet 29 communicating with the first wiring
passageway 19 is provided for introducing power, telephone
and signal or special services wiring 30, 31, 32, respectively, to the space above the floor structure 28. In the
preferred arrangement, the power wiring 30 preferably is
distributed through the second wiring passageway 20 thereby
satisfying the building code requirement that high voltage
(50 volts or greater) power wiring be distributed through a
totally enclosed metal conduit. The telephone wiring 31
preferably is conveyed through the first wiring passageway
19 since the first wiring passageway 19 is readily accessible
and provides adequate space for Amphenol connectors. The
signal or special services wiring 32 may be distributed
through the third wiring passageway.

Referring to FIGURES 1 and 2, the first capping means 12
may be formed from sheet metal having a thickness equivalent
to that of the corrugated element 11. The first capping
means 12 comprises a central web 33 having depending flanges
34 along the opposite longitudinal edges thereof. The
central web 33 may be provided with stiffening elements 54
(FIGURE 1) of any suitable pattern, either in the form of
embossments as illustrated in FIGURE 1 or indentations. It
will be observed in FIGURE 2 that the central web 33 is substantially flush with upper surfaces 14a (only one illustrated) of the crests 14 and that the depending flanges 34
(only one visible) engages the inclined web 16. The first
capping means 12 may be secured to the corrugated element 11
by a suitable agent, such as a spot weld 45 shown in FIGURE
2.

Referring to FIGURES 1 and 3, the second or lower capping
means 13 may be formed from sheet metal having a thickness
equivalent to that of the corrugated element 11. The lower
capping means 13 comprises a central web 35 having upstanding walls 36 on opposite sides thereof, which terminate in
outwardly extending ribs 37. When installed (FIGURE 3),
each of the ribs 37 engages a groove 38 presented by a rib
39 which is formed in the inclined web 16. Preferably the
central web 35 is not disposed below the lower faces 15c of
the adjacent valleys 15. Instead the lower face 35a of the
central web 35 preferably is substantially flush with the
lower faces 15c of the adjacent valleys 15. In this position, the valleys 15 are in flush engagement with the upper
surface 25 of the substructure 21 (FIGURE 4) and the cross-
sectional area of the second wiring passageway 20 (FIGURE 4)
is maximized. The upstanding sidewalls 36 preferably are
splayed outwardly -- compare the dotted outline and the full
line positions of the sidewalls 36 in FIGURE 3. When the
second capping means 13 is installed, the sidewalls 36 and
ribs 37 tend to return to their original outwardly splayed
positions and are thereby urged outwardly into firm engagement with the corrugated element 11. This arrangement
provides good electrical contact between the first capping
means 13 and the corrugated element 11 thereby providing
electrical grounding continuity between the two elements.
If desired, the second capping means 13 may be secured to
the corrugated element 11 by a suitable agent, such as a
spot weld (not illustrated).

The present metal raceway section may provide plural passageway-forming flutes. For example, FIGURE 5 illustrates a
concrete floor structure 40 incorporating a metal raceway
section 41. The metal raceway section 41 incorporates a
corrugated element 42 which presents three lengthwise
flutes 17a, 17b, 17c and two lengthwise troughs 18a, 18b.
The lengthwise troughs 17b and 17c both comprise passageway-
forming flutes which cooperate with the upper surface 25 of
the substructure 21 to provide third and fourth wiring
passageways 26, 43. The fourth wiring passageway 43 may be
employed, for example, to distribute computer signals wiring
(not illustrated) throughout the floor area. Suitable outlets 44 communicating with the fourth wiring passageway
43 provide access to the computer signals wiring at selected
locations in the floor.

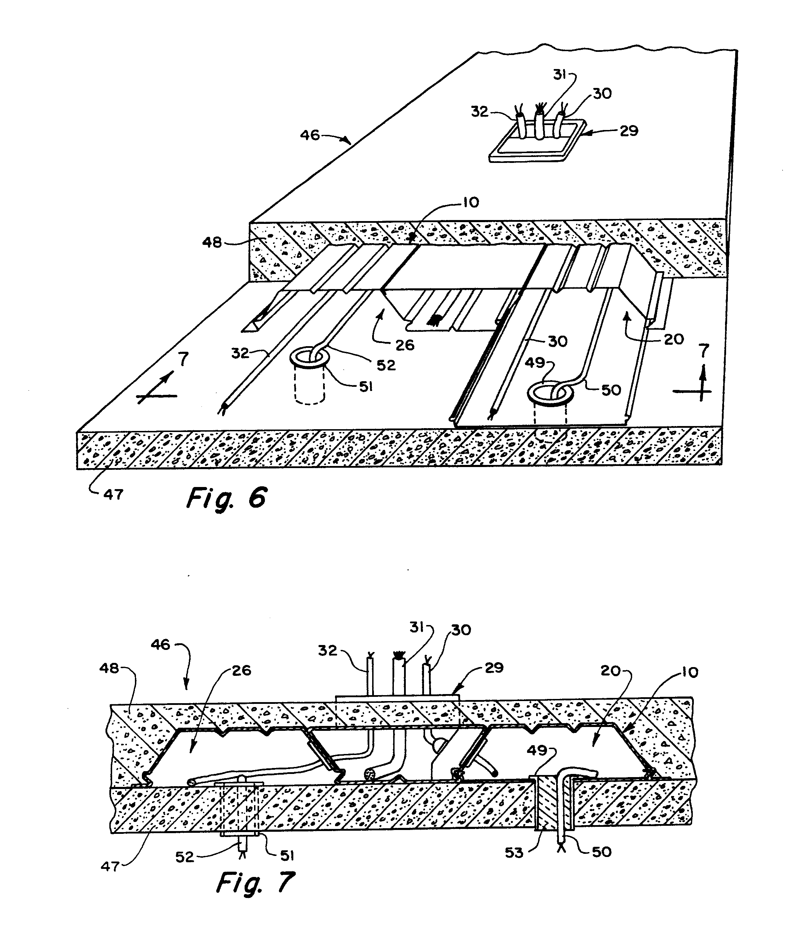

The present metal raceway section 10 or 42 may be employed
in multi-story concrete buildings.  FIGURES 6 and 7 illustrate a fragment of one floor 46 wherein the metal raceway
section 10 is embedded between a substructure or first layer
of concrete 47 and a covering or second layer of concrete
48.  Plural floor outlets 29 (only one illustrated) provide
access to the wiring 30, 31, 32 from the floor level to the
space above the floor 46.

In accordance with this invention, suitable outlets 49 (only
one illustrated) may be provided in the substructure 47
along the length of the second wiring passageway.  Power
wiring 50 may be distributed downwardly through the outlets
49 to the space below the floor 46 to provide power for
electrical equipment such as lighting, display boards, and
the like.  Suitable outlets 51 (only one illustrated) may
also be provided in the substructure 47 along the length of
the third wiring passageway 26.  Signal or special services
wiring 52 may be distributed downwardly through the outlets
51 to space below the floor 46 to signal receiving equipment
such as alarms, monitors and the like.  Suitable fireproofing
material 53 (FIGURE 7) such as rock wool may be provided in
the interior of the outlets 49 and 51 to maintain the fireproof integrity of the floor 46.

It will be appreciated, particularly by inspection of
FIGURE 6, that the outlets 49 and 51 may be installed at any
phase in the construction of the floor 46.  That is, they
may be installed (a) prior to pouring the substructure 47;
(b) after the substructure has hardened but prior to installing the metal raceway section 10 and pouring of the
covering layer of concrete 48; or (c) after the construction
of the floor 46.  The outlets 49, 51 are most expeditiously and preferably installed during phase (b), supra.

EXAMPLES:  A typical metal raceway section 10 (FIGURE 1) is assembled from a corrugated element 11 and first and second infill plates 12, 13 each fabricated from metal-coated sheet steel having, for example, a thickness of 20 gauge.

The corrugated element 11 has width of 20.875 inches (53.02 cm) and a height -- distance between the crests 14 and the valleys 15 -- of 2 inches (5.08 cm) or 3 inches (7.62 cm). The crests 14 and the valley 15a each have a width of 4.75 inches (12.07 cm). The lateral valleys 15b have a width of 0.8125 inches (2.06 cm). The distance between the crests 14 is 7.25 inches (18.42 cm). The distance between the intermediate valley 15a and each of the lateral valleys 15b is 7.25 inches (18.42 cm). The first infill plate 12 has width of 7.0625 inches (17.94 cm). The flanges 34 have a width of 0.25 inch (0.64 cm). The second infill plate 13 has a width of 7.125 inches (18.10 cm). The height of each sidewall 36 including the rib 37 is 0.5625 inches (1.43 cm).

A typical metal raceway section 44 (FIGURE 5) utilizes a corrugated element 42 which is similar to the corrugated element 11 of FIGURE 1 but presents three lengthwise flutes 17a, 17b, 17c. The corrugated element 42 has a width of 32.875 inches (83.50 cm).

PATENTANWÄLTE

A. GRÜNECKER
DIPL.-ING.

H. KINKELDEY
DR.-ING.

W. STOCKMAIR
DR.-ING. · AeE (CALTECH)

K. SCHUMANN
DR. RER. NAT.· DIPL.-PHYS.

P. H. JAKOB
DIPL.-ING.

G. BEZOLD
DR. RER. NAT.· DIPL.-CHEM.

8 MÜNCHEN 22
MAXIMILIANSTRASSE 43

- 1 -

CLAIMS:

1. A metal raceway section for distributing electrical wiring, comprising;

   a corrugated element in the form of a continuous metal sheet having at least one lengthwise trough and at least two lengthwise flutes;

   first capping means enclosing a first said lengthwise trough thereby to provide a first wiring passageway;

   second capping means enclosing a first of said lengthwise flutes thereby to provide a second wiring passageway; and

   others of said lengthwise flutes comprising passageway-forming lengthwise flutes adapted to cooperate with an upper surface presented by a substructure which supports said raceway section, to form an additional wiring passageway.

2. The metal raceway section of Claim 1 wherein said first wiring passageway is adjacent to said second wiring passageway.

3. The metal raceway section of Claim 1 wherein said first wiring passageway is adjacent to one of said passageway-forming lengthwise flutes.

4. The metal raceway section of Claim 1 wherein said second wiring passageway and one of said passageway-forming lengthwise flutes are positioned on opposite sides of said first wiring passageway.

5. The metal raceway section of Claim 1 wherein said first capping means comprises an infill plate which is substantially flush with those upper faces of said corrugated element positioned on opposite sides of said first said lengthwise trough.

6. The metal raceway section of Claim 1 wherein said second capping means comprises an infill plate which is substantially flush with those lower faces of said corrugated element positioned on opposite sides of said first said lengthwise flutes.

7. An electrical wiring distributing floor structure comprising:

   a substructure presenting an upper surface;

   a corrugated element in the form of a continuous metal sheet having at least one lengthwise trough and at least two lengthwise flutes;

   first capping means enclosing a first said lengthwise trough thereby to provide a first wiring passageway; and

   second capping means enclosing a first of said lengthwise flutes thereby to provide a second wiring passageway;

said corrugated element overlying said upper surface whereby others of said lengthwise flutes cooperate with those portions of said upper surface which enclose said others of said lengthwise flutes to provide third wiring passageways; and

a covering layer of concrete.

8. The floor structure of Claim 7 wherein said first wiring passageway is adjacent to said second wiring passageway.

9. The floor structure of Claim 7 wherein said first wiring passageway is adjacent to one of said third wiring passageways.

10. The floor structure of Claim 7 wherein said first wiring passageway is positioned between and adjacent to said second wiring passageway and to one of said third wiring passageways.

11. The floor structure of Claim 7 wherein said first capping means comprises an infill plate which is substantially flush with those upper faces of said corrugated element positioned on opposite sides of said first said lengthwise trough.

12. The floor structure of Claim 7 wherein said second capping means comprises an infill plate which is substantially flush with those lower faces of said corrugated element positioned on opposite sides of said first of said lengthwise flutes.

13. The floor structure of Claim 7 wherein said substructure comprises a concrete slab.

0003506

14. The floor structure of Claim 7 wherein said substructure comprises a compacted layer, and a vapor barrier covering the upper surface of said layer.

15. The floor structure of Claim 13 including an outlet fitting in said concrete slab establishing communication between one of the wiring passageways and the space below said floor structure.

0003506

1/2

Fig. 5

Fig. 1

Fig. 2

Fig. 3

Fig. 4

0003506

Fig. 6

Fig. 7

| Category | DOCUMENTS CONSIDERED TO BE RELEVANT | | CLASSIFICATION OF THE APPLICATION (Int. Cl.²) |
|---|---|---|---|
| | Citation of document with indication, where appropriate, of relevant passages | Relevant to claim | |
| D | US - A - 3 592 956 (ROBERTSON)<br>* Column 3, lines 8-13; figure 5 *<br>--- | 1-5,<br>7-11 | H 02 G  3/28<br>E 04 B  5/48 |
| | BE - A - 835 641 (NOVOTEC)<br>* Page 4, paragraph 3; figures 4,5 *<br>--- | 1,6,7,<br>12 | |
| | FR - A - 2 282 510 (BABU)<br>* Page 3, lines 10-15; figure 1 *<br>--- | 1-5,<br>7-11 | **TECHNICAL FIELDS SEARCHED (Int.Cl.²)** |
| | US - A - 3 886 702 (ROBERTSON)<br>* Column 3, lines 50-54; figure 1 *<br>---- | 1-4,<br>7-10 | H 02 G  3/28<br>E 04 B  5/48<br>H 02 G  3/04 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-04-1979 | TIELEMANS |

EPO Form 1503.1   06.78